# EUROPEAN PATENT APPLICATION

(11) **EP 4 487 936 A1**
(43) Date of publication of application: **08.01.2025**
(21) Application number: 23763442.3
(22) Date of filing: 28.02.2023
(51) Int. Cl.: B01D 53/04, B01D 53/44, B01D 53/82, B01D 15/00

(54) **ORGANIC SOLVENT RECOVERY SYSTEM**

(30) Priority: 04.03.2022 JP 2022033483
(71) Applicant: TOYOBO MC Corporation, Osaka 530-0001 (JP)
(72) Inventor: KOHNO, Daiki, Osaka-shi, Osaka 530-0001 (JP); ONO, Kazuyuki, Osaka-shi, Osaka 530-0001 (JP); OKADA, Takemasa, Otsu-shi, Shiga 520-0292 (JP)
(74) Representative: Vossius & Partner Patentanwälte Rechtsanwälte mbB
(86) International application number: PCT/JP2023/007314
(87) International publication number: WO 2023/167185

(57) **Abstract**

Provided is an organic solvent recovery system including a recovery device (1), a dehydration device (2), and a return device (3), in which the dehydration device (2) includes: a dehydration material (202) that adsorbs moisture contained in a recovered solvent (113B) by coming into contact with the recovered solvent (11B); one or more dehydration treatment tanks (203) in which the dehydration material (202) is stored; and a discharge mechanism that supplies the recovered solvent (113B) separated by a separator (113) to the dehydration treatment tanks (203), and discharges, from the dehydration treatment tanks (203), a dehydrated solvent (E) dehydrated from the recovered solvent (113B) by the dehydration material (202), and the return device (3) sends the recovered solvent (113B) into a layer of the recovered solvent (113B) in the separator (113) when returning the recovered solvent (113B) in the dehydration treatment tanks (203) to the separator (113). According to the organic solvent recovery system, it is possible to discharge the dehydrated solvent from which moisture is sufficiently removed even upon restarting of the system.

## Description

### TECHNICAL FIELD

The present disclosure relates to an organic solvent recovery system.

### BACKGROUND ART

In the organic solvent recovery system, a mechanism is adopted, the mechanism switching between an adsorption stage that supplies a treated gas to treatment tanks and a desorption stage that supplies a desorbed gas to the treatment tanks by disposing a pair of the treatment tanks in which an organic solvent in the treated gas is adsorbed by an adsorbent, as well as a treated gas supply device and a desorbed gas supply device for each of the treatment tanks.

As an adsorbent of a gas treatment device, for example, an activated carbon fiber ((ACF), hereinafter referred to as ACF) is used. The ACF is excellent in a function of adsorbing a low-concentration organic solvent-containing gas, and is used as the adsorbent. For example, Japanese Patent Laying-Open No. 2014-147864 (PTL 1) discloses a gas treatment device in which the ACF is fixed to a support body or formed in a cylindrical shape by self-support, and vertically disposed in a core material.

### CITATION LIST

### PATENT LITERATURE

PTL 1: Japanese Patent Laying-Open No. 2014-147864

### SUMMARY OF INVENTION

### TECHNICAL PROBLEM

A recovered solvent recovered from the adsorbent may contain moisture. In a case where the recovered solvent is reused in a production facility, dehydration (removal of moisture) of the recovered solvent is required. As a means therefor, a technique has been known in which the recovered solvent is brought into contact with a dehydration material such as zeolite to perform dehydration. The recovered solvent is caused to pass through a dehydration device having a dehydration treatment tank filled with the dehydration material to perform a dehydration operation from the recovered solvent.

However, in a case where the dehydration device is stopped and a loading amount of the organic solvent in the treated gas is less than a designed amount, the recovered solvent may be continuously retained in the dehydration treatment tank for a long time. In this case, there is a problem that water returns to the recovered solvent due to desorption of the water from the dehydration material in the dehydration treatment tank, and a dehydrated solvent from which moisture is insufficiently removed is discharged when the dehydration device is restarted. As another problem, the organic solvent contained in the dehydration treatment tank is volatilized through a pipe outlet of the dehydration device, resulting in a decrease in a recovery amount of the organic solvent.

The present disclosure is to solve the above problems, and a first object is to provide an organic solvent recovery system capable of discharging a dehydrated solvent from which moisture is sufficiently removed even upon restarting of the system. Moreover, a second object is to provide an organic solvent recovery system capable of suppressing volatilization of an organic solvent contained in a dehydration treatment tank through a pipe outlet of a dehydration device, and suppressing a decrease in a recovery amount of the organic solvent.

### SOLUTION TO PROBLEM

The organic solvent recovery system according to the present disclosure is an organic solvent recovery system that includes a recovery device, a dehydration device, and a return device, and has the following configuration.

The recovery device includes: an adsorbent that adsorbs an organic solvent by coming into contact with a treated gas containing the organic solvent which is hardly soluble in water and has a specific gravity larger than that of the water, and desorbs the organic solvent by coming into contact with water vapor; two or more treatment tanks in which the adsorbent is accommodated; an adsorption stage that supplies the treated gas to the treatment tanks, removes the organic solvent onto the adsorbent through adsorption, and discharges a clean gas; a desorption stage that supplies the water vapor to the treatment tanks, desorbs a recovered solvent from the adsorbent, and discharges a desorbed gas; a stage that sequentially repeats the adsorption stage and the desorption stage for the two or more treatment tanks; a condenser that cools and condenses the desorbed gas, and discharges a desorbed liquid; and a separator that separates the desorbed liquid into a layer of separated water and a layer of the recovered solvent.

The dehydration device includes: a dehydration material that adsorbs moisture contained in the recovered solvent by coming into contact with the recovered solvent; one or more dehydration treatment tanks in which the dehydration material is stored; and a discharge mechanism that supplies the recovered solvent separated by the separator to the dehydration treatment tanks, and discharges, from the dehydration treatment tanks, a dehydrated solvent dehydrated from the recovered solvent by the dehydration material.

The return device sends the recovered solvent to the layer of the recovered solvent in the separator when returning the recovered solvent in the dehydration treatment tanks to the separator.

In the organic solvent recovery system, the return device has a return flow path that discharges the recovered solvent to an outer side of the dehydration treatment tanks and returns the recovered solvent to the separator in a case where the dehydration device stops supplying the recovered solvent to the dehydration treatment tanks.

In the organic solvent recovery system, the dehydration device includes a speed adjustment device that adjusts a speed of the recovered solvent to be returned to the separator.

In the organic solvent recovery system, the speed adjustment device pressurizes inner portions of the dehydration treatment tanks by using a part of the treated gas or the clean gas, and discharges the recovered solvent to the outer side of the dehydration treatment tanks.

The organic solvent recovery system includes three or more of the treatment tanks, the desorption stage is executed in one of the treatment tanks, and remaining treatment tanks are connected in series in multiple stages to execute the adsorption stage.

### ADVANTAGEOUS EFFECTS OF INVENTION

According to the present disclosure, it is possible to provide the organic solvent recovery system capable of discharging the dehydrated solvent from which the moisture is sufficiently removed even upon the restarting of the system. Preferably, it is possible to provide the organic solvent recovery system capable of suppressing the volatilization of the organic solvent contained in the dehydration treatment tank through the pipe outlet of the dehydration device, and suppressing the decrease in the recovery amount of the organic solvent.

### BRIEF DESCRIPTION OF DRAWINGS

Fig. 1 is a diagram illustrating a configuration of an organic solvent recovery system according to a first embodiment.
Fig. 2 is a cross-sectional view taken along arrow line II-II in Fig. 1.
Fig. 3 is a diagram illustrating a configuration of an organic solvent recovery system according to a second embodiment.
Fig. 4 is a diagram illustrating a configuration of an organic solvent recovery system according to a third embodiment.
Fig. 5 is a diagram illustrating a configuration of an organic solvent recovery system according to a fourth embodiment.
Fig. 6 is a diagram illustrating a configuration of an organic solvent recovery system according to another embodiment.
Fig. 7 is a diagram illustrating a configuration of an organic solvent recovery system according to still another embodiment.

### DESCRIPTION OF EMBODIMENTS

An organic solvent recovery system according to each of embodiments based on the present disclosure will be described below with reference to drawings. In the embodiments described below, in a case of referring to the number, the amount, and the like, the scope of the present invention is not necessarily limited to the number, the amount, and the like unless otherwise specified. The same components and corresponding components are denoted by the same reference numerals, and redundant description may not be repeated. It is originally planned to appropriately combine and use the configurations in the embodiments.

The organic solvent used in the present disclosure indicates an organic solvent that is hardly soluble in water and has a specific gravity larger than that of the water. Specifically, the organic solvent refers to hydrofluorocarbons such as 1, 2, 4-trichlorobenzene, 1, 1, 1-trichloroethane, trichloroethylene, perchloroethylene, methylene chloride, carbon tetrachloride, chloroform, ethylene chloride, dimethyl carbonate, 1-bromopropane, O-dichlorobenzene, nitrobenzene, 1, 2-dichloropropane, epichlorohydrin, monochlorobenzene, 1, 2-dichloroethane, 1, 1, 2-trichloroethane, 1, 2-dichloroethane, 1, 1, 2-trichloroethane, 1, 1, 2, 2-tetrachloroethane, pentachloroethane, 1, 1-dichloroethylene, methyl bromide, as well as Freon 11, Freon 12, Freon 225, decafluoropentane, and ethylnonafluorobutyl ether. Organic solvents other than those listed here may be treated.

### [First embodiment: organic solvent recovery system 1000]

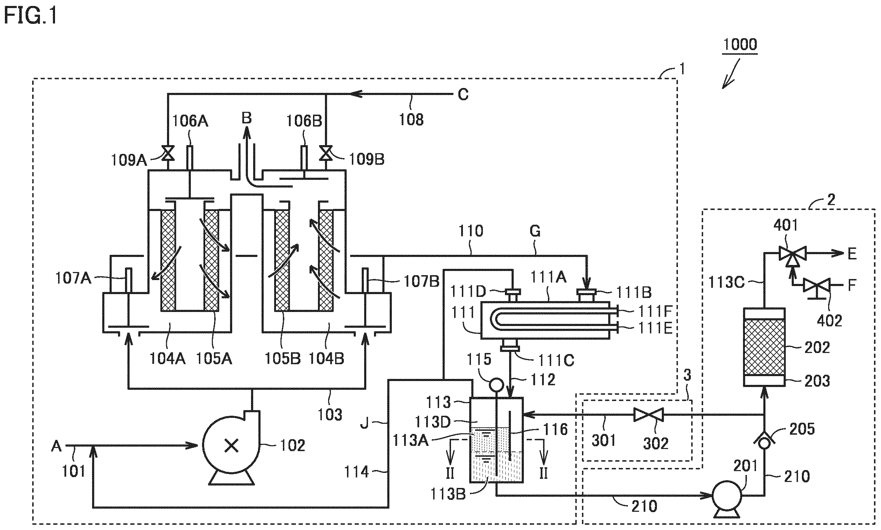

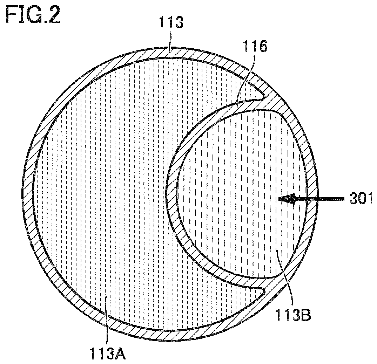

An organic solvent recovery system 1000 according to the present embodiment will be described with reference to Figs. 1 and 2. Fig. 1 is a diagram illustrating a configuration of organic solvent recovery system 1000, and Fig. 2 is a cross-sectional view taken along arrow line II-II in Fig. 1.

Organic solvent recovery system 1000 includes a recovery device 1, a dehydration device 2, and a return device 3. Detailed configuration of each of these devices will be described below.

### (Recovery device 1)

Recovery device 1 includes a first treatment tank 104A and a second treatment tank 104B. First treatment tank 104A includes a first adsorbent 105A in a cylindrical shape, and second treatment tank 104B includes a second adsorbent 105B in a cylindrical shape. For first adsorbent 105A and second adsorbent 105B, the adsorption stage is executed by causing a treated gas A to pass from an outer side to an inner side, and the desorption stage is executed by causing water vapor to pass from the inner side to the outer side. For example, the ACF is used for first adsorbent 105A and second adsorbent 105B.

First treatment tank 104A and second treatment tank 104B communicate with a treated gas introduction line 103 and a desorbed gas line 110. In order to open and close communication with treated gas introduction line 103, and open and close communication with desorbed gas line 110, first treatment tank 104A and second treatment tank 104B are disposed with a first automatic lower damper 107A and a second automatic lower damper 107B, respectively.

Above first treatment tank 104A and second treatment tank 104B, a first automatic upper damper 106A and a second automatic upper damper 106B are disposed for controlling flow of treated gas A, respectively.

Desorbed gas line 110 is connected with a condenser 111. Condenser 111 has a condenser inlet 111B to which desorbed gas line 110 is connected and a condenser outlet 111C to which a desorbed liquid line 112 is connected. A cooling water pipe 111A having a cooling water inlet 111E and a cooling water outlet 111F is accommodated in condenser 111.

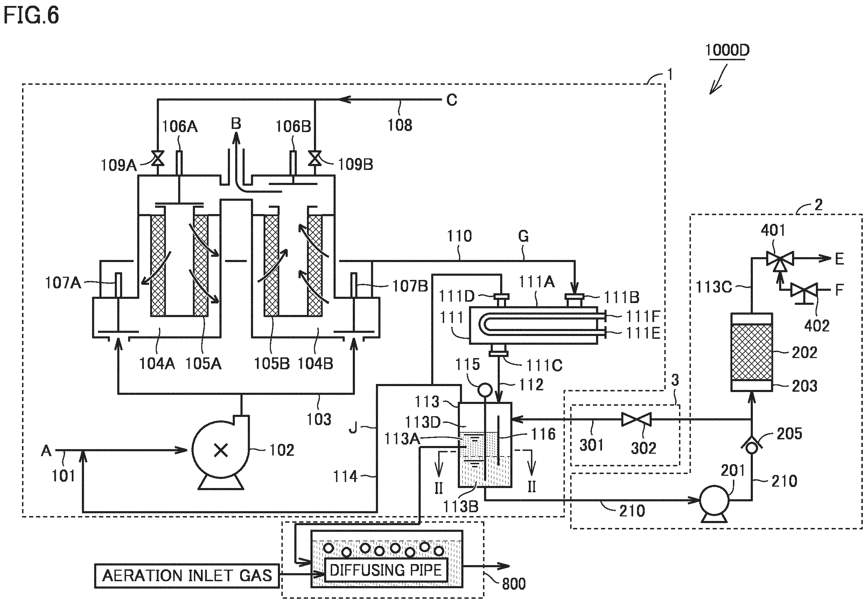

Desorbed liquid line 112 connected to condenser outlet 111C is connected to a separator 113. Separator 113 separates a desorbed liquid sent from desorbed liquid line 112 into a layer of separated water 113A and a layer of a recovered solvent 113B. It is recommended to adopt a configuration in which separated water 113A is discharged after being aerated by an aerator (see an aerator 800 of an organic solvent recovery system 1000D in Fig. 6).

Here, the configuration in which separated water 113A is discharged after being aerated by the aerator refers to, for example, vaporizing and removing an organic solvent in separated water 113A by performing aeration treatment while heating separated water 113A. By combining with organic solvent recovery system 1000 according to the present embodiment, the organic solvent in separated water 113A can be removed and cleaned.

Since the organic solvent which is hardly soluble in water and has a specific gravity larger than that of the water is used in treated gas A, recovered solvent 113B is retained in a lower layer and separated water 113A is retained in an upper layer inside separator 113. Accordingly, recovered solvent 113B is in a state of being covered with separated water 113A, and volatilization of recovered solvent 113B to an outer side of the system is suppressed. A recovered solvent level monitor 115 is disposed in separator 113 to detect a level position of the layer of recovered solvent 113B.

A returned gas line 114 is connected to a returned gas outlet 111D of condenser 111 and a gas phase region 113D of separator 113. Returned gas line 114 is introduced into a treated gas line 101. A gas returned from returned gas line 114 to treated gas line 101 may be introduced to be a countercurrent flow with respect to a flow direction of treated gas A.

Treated gas line 101 is disposed with a treated gas blower 102. Treated gas A sent out by treated gas blower 102 is sent to first treatment tank 104A and second treatment tank 104B through treated gas introduction line 103.

Water vapor C is supplied to first treatment tank 104A and second treatment tank 104B through a water vapor line 108. Water vapor line 108 communicates with first treatment tank 104A, and water vapor line 108 is disposed with a first water vapor on-off valve 109A. Water vapor line 108 communicates with second treatment tank 104B, and water vapor line 108 is disposed with a second water vapor on-off valve 109B.

In recovery device 1 having the above configuration, first automatic upper damper 106A, second automatic upper damper 106B, first automatic lower damper 107A, second automatic lower damper 107B, first water vapor on-off valve 109A, second water vapor on-off valve 109B, condenser 111, separator 113, recovered solvent level monitor 115, and treated gas blower 102 are appropriately controlled to be operated and on/off by a control device without being illustrated to implement a gas treatment method shown below.

### (Gas treatment method)

The gas treatment method using recovery device 1 having the above configuration will be described. In Fig. 1, the desorption stage is executed in first treatment tank 104A of recovery device 1, and the adsorption stage is executed in second treatment tank 104B.

### (Adsorption stage in second treatment tank 104B)

Treated gas A containing an organic solvent-containing gas is sent from treated gas line 101 to second treatment tank 104B for the adsorption stage by treated gas blower 102. Second automatic lower damper 107B is controlled to open treated gas introduction line 103 and close desorbed gas line 110.

Second automatic upper damper 106B is controlled to be in an open state that enables treated gas A to flow through second adsorbent 105B.

Gas adsorption is performed by second adsorbent 105B of second treatment tank 104B, and the gas is led to the outer side of the system as a clean gas B. Second water vapor on-off valve 109B of water vapor line 108 is controlled to be in a closed state.

### (Desorption stage in first treatment tank 104A)

First automatic lower damper 107A is controlled to be in a state where treated gas introduction line 103 is closed and desorbed gas line 110 is opened without sending treated gas A to first treatment tank 104A. First automatic lower damper 107A closes gas flow from the outer side to the inner side of first adsorbent 105A. Water vapor C for the desorption is introduced by enabling flow from the inner side to the outer side of first adsorbent 105A through water vapor line 108. First water vapor on-off valve 109A of water vapor line 108 is controlled to be in an open state.

In first treatment tank 104A, the water vapor is ejected, and the organic solvent adsorbed on first adsorbent 105A is desorbed from first adsorbent 105A. A desorbed gas G containing the organic solvent desorbed is sent to condenser 111 through desorbed gas line 110.

Desorbed gas G desorbed and water vapor C are condensed by condenser 111.

A desorbed liquid H containing a high concentration organic solvent is sent to separator 113 through desorbed liquid line 112. Desorbed liquid H is separated into the layer of separated water 113A and the layer of recovered solvent 113B in separator 113. In separator 113, as described above, recovered solvent 113B is retained in the lower layer, and separated water 113A is retained in the upper layer.

A returned gas J retained in condenser 111 and separator 113 is pushed out by desorbed gas G, introduced into treated gas line 101 through returned gas line 114, and mixed with treated gas A. Treated gas A and returned gas J introduced from treated gas line 101 are sent to second treatment tank 104B.

The above stages are repeatedly executed, and recovered solvent 113B is sent to dehydration device 2 from a recovered solvent line 210 connected to the layer of recovered solvent 113B in separator 113.

When a certain period of time elapses, the adsorption stage and the desorption stage are switched, the adsorption stage is executed in first treatment tank 104A, and the desorption stage is executed in second treatment tank 104B. Thus, by a continuous treatment in which the adsorption stage and the desorption stage are alternately executed, recovered solvent 113B is continuously recovered by recovery device 1.

### (Dehydration device 2)

Next, in dehydration device 2, recovered solvent 113B recovered by recovery device 1 is subjected to a dehydration treatment. A configuration of dehydration device 2 will be described below. Dehydration device 2 includes a dehydration material 202 that adsorbs moisture contained in recovered solvent 113B by coming into contact with recovered solvent 113B separated by separator 113, and a dehydration treatment tank 203 in which dehydration material 202 is stored. As dehydration material 202, for example, zeolite or the like is used. Further, activated alumina, an ion exchange resin, activated carbon, or the like may be used.

Separator 113 and dehydration treatment tank 203 are communicated by recovered solvent line 210. One end of recovered solvent line 210 is connected to a tank of recovered solvent 113B separated by separator 113. The other end of recovered solvent line 210 is connected to a lower end of dehydration treatment tank 203.

A pump 201 is disposed in a middle region of recovered solvent line 210. Recovered solvent 113B is sent into dehydration treatment tank 203 by pump 201. A check valve 205 is disposed in recovered solvent line 210 on a downstream side of pump 201. Check valve 205 prevents backflow of recovered solvent 113B from dehydration treatment tank 203 toward pump 201.

A dehydrated solvent discharge line 113C is disposed in an upper portion of dehydration treatment tank 203. Dehydrated solvent discharge line 113C is disposed with a dehydrated solvent valve 401. Moreover, a flow regulating valve 402 capable of introducing a predetermined gas is connected to dehydrated solvent valve 401. Pump 201, dehydrated solvent valve 401, and flow regulating valve 402 are appropriately controlled to be operated and on/off by a control device without being illustrated to implement a dehydration treatment shown below.

### (Dehydration treatment)

Recovered solvent 113B sent from a lower side of dehydration treatment tank 203 through starting of pump 201 is dehydrated by coming into contact with dehydration material 202, and discharged as a dehydrated solvent E from dehydrated solvent discharge line 113C to the outer side of the system. At least recovered solvent line 210, pump 201, dehydration, and dehydrated solvent discharge line 113C constitute a discharge mechanism that discharges dehydrated solvent E from dehydration treatment tank 203.

### (Return device 3)

In a case where dehydration device 2 is stopped, or in a case where a loading amount of the organic solvent in the treated gas is less than a designed amount, recovered solvent 113B continues to retain in dehydration treatment tank 203 for a long time. At this time, there is a possibility that water returns to recovered solvent 113B due to desorption of the water from dehydration material 202 in dehydration treatment tank 203, and dehydrated solvent E from which moisture is insufficiently removed is discharged when dehydration device 2 is restarted. Moreover, there is also a possibility that the organic solvent contained in dehydration treatment tank 203 is volatilized through a pipe outlet of dehydration device 2, resulting in a decrease in a recovery amount of the organic solvent.

Therefore, return device 3 performs an operation of returning recovered solvent 113B in dehydration treatment tank 203 to separator 113 in the case where dehydration device 2 is stopped or in the case where the loading amount of the organic solvent in the treated gas is less than the designed amount. Specifically, return device 3 is configured to return recovered solvent 113B to the layer of recovered solvent 113B in separator 113.

Referring to Fig. 2, a partition plate 116 is disposed in separator 113 of the present embodiment. Partition plate 116 constitutes an independent space with upper and lower ends released to an internal space of separator 113. The lower end of partition plate 116 reaches the tank of recovered solvent 113B. The upper end of partition plate 116 is configured to be released to gas phase region 113D. When organic solvent recovery system 1000 is operated, it is necessary to store a predetermined amount of recovered solvent 113B in advance in separator 113 to a height exceeding the lower end of partition plate 116.

Referring again to Fig. 1, a return line 301 branching from recovered solvent line 210 is disposed on a downstream side of check valve 205 of recovered solvent line 210 communicating with dehydration treatment tank 203. Return line 301 is a flow path that discharges recovered solvent 113B to an outer side of dehydration treatment tank 203 and returns recovered solvent 113B to separator 113 in a case where dehydration device 2 stops supplying recovered solvent 113B to dehydration treatment tank 203. Return line 301 is disposed with an on-off valve 302.

On-off valve 302, dehydrated solvent valve 401, and flow regulating valve 402 are appropriately controlled to be operated and on/off by a control device without being illustrated to implement a return treatment of recovered solvent 113B in dehydration treatment tank 203 to separator 113, as shown below.

### (Return treatment of recovered solvent 113B)

In a case where recovered solvent 113B is discharged to the outer side of dehydration treatment tank 203, a predetermined gas is introduced from flow regulating valve 402 in a state where on-off valve 302 is released, and dehydrated solvent valve 401 is closed. Accordingly, recovered solvent 113B remaining in dehydration treatment tank 203 can be returned to separator 113 by pressurizing an internal pressure of dehydration treatment tank 203.

Here, as the predetermined gas, outside air may be used, but for example, treated gas A or clean gas B may be used. Further, by controlling feeding amounts and feeding speeds of these gases by flow regulating valve 402, it is possible to gradually introduce the gases without introducing the gases at once. Accordingly, it is possible to adjust a feeding amount and a feeding speed of recovered solvent 113B to be returned to separator 113. As a result, the organic solvent contained in treated gas A can be efficiently recovered. In particular, in a case where the organic solvent is expensive, an economic effect thereof is significant.

Recovered solvent 113B returned to separator 113 is sent into a space inside separator 113, which is partitioned by partition plate 116. Accordingly, recovered solvent 113B returned to separator 113 is directly returned to the layer of recovered solvent 113B in separator 113. Therefore, the recovered solvent will not be mixed with separated water 113A again.

Thus, according to organic solvent recovery system 1000 in the present embodiment, in the case where dehydration device 2 is stopped or in the case where the loading amount of the organic solvent in treated gas A is less than the designed amount, an operation of returning recovered solvent 113B in dehydration treatment tank 203 to separator 113 is controlled as described above to avoid retention of recovered solvent 113B in dehydration treatment tank 203 for a long time.

Accordingly, it is possible to discharge dehydrated solvent E from which moisture is sufficiently removed to the outer side of the system even when dehydration device 2 is restarted by organic solvent recovery system 1000. Moreover, it is possible to suppress the volatilization of the organic solvent contained in dehydration treatment tank 203 through the pipe outlet of dehydration device 2. Accordingly, organic solvent recovery system 1000 as a whole can be expected to improve the recovery of the organic solvent.

When dehydration device 2 is stopped (pump 201 is stopped), it is also possible to avoid the retention of recovered solvent 113B in dehydration treatment tank 203 for a long time even by fully closing an inlet and an outlet of dehydration treatment tank 203 with a valve or the like. However, if a part of recovered solvent 113B volatilizes in dehydration treatment tank 203 due to an outside air temperature or the like, the internal pressure may increase. Moreover, if recovered solvent 113B is continuously held in dehydration treatment tank 203 over time, the water dehydrated may also be desorbed from dehydration material 202. Therefore, as shown in the above embodiment, it is preferable to control the operation of returning recovered solvent 113B in dehydration treatment tank 203 to separator 113.

Note that it is also possible to adopt a configuration including a temperature control unit by which recovered solvent 113B contained in one or more of separator 113, dehydration device 2, return device 3, and dehydration treatment tank 203 is adjusted to a predetermined temperature.

### [Second embodiment: organic solvent recovery system 1000A]

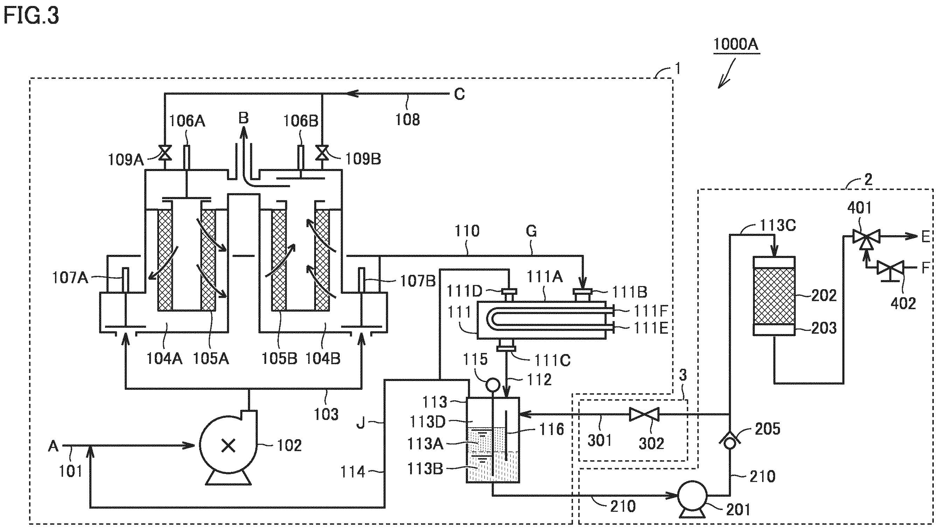

An organic solvent recovery system 1000A according to the present embodiment will be described with reference to Fig. 3. Fig. 3 is a diagram illustrating a configuration of organic solvent recovery system 1000A.

A basic configuration of organic solvent recovery system 1000A is the same as that of organic solvent recovery system 1000 described in the first embodiment above. A difference lies in the configuration of dehydration device 2. In dehydration device 2 of the present embodiment, recovered solvent line 210 is connected to dehydration treatment tank 203 on an upper side of dehydration treatment tank 203, and dehydrated solvent discharge line 113C is connected to a lower side of dehydration treatment tank 203. Therefore, recovered solvent 113B flows from above downward.

With this configuration, it is also possible to obtain the same operational effects as those of organic solvent recovery system 1000 according to the first embodiment above.

### [Third embodiment: organic solvent recovery system 1000B]

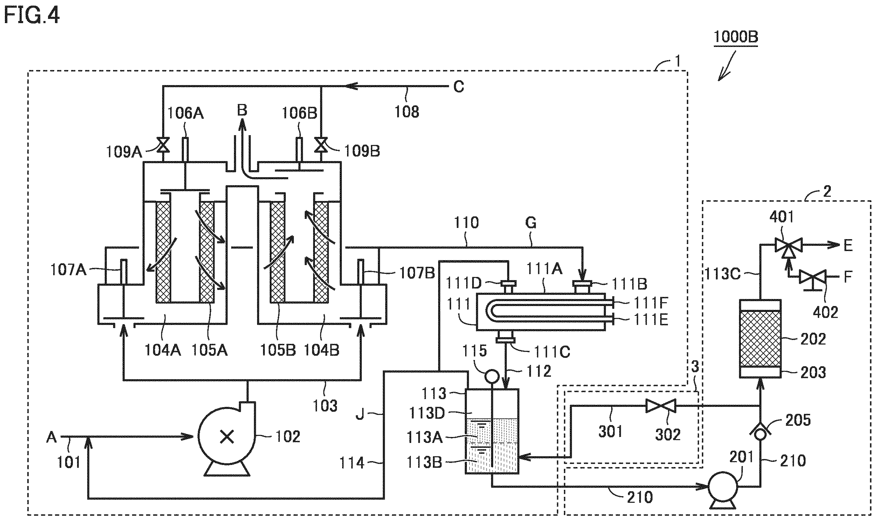

An organic solvent recovery system 1000B according to the present embodiment will be described with reference to Fig. 4. Fig. 4 is a diagram illustrating a configuration of organic solvent recovery system 1000B.

A basic configuration of organic solvent recovery system 1000B is the same as that of organic solvent recovery system 1000 described in the first embodiment above. A difference lies in a configuration of separator 113. Separator 113 in the present embodiment is not disposed with partition plate 116, but is directly connected to the tank of recovered solvent 113B in separator 113.

With this configuration, it is also possible to obtain the same operational effects as those of organic solvent recovery system 1000 according to the first embodiment above.

### [Fourth embodiment: organic solvent recovery system 1000C]

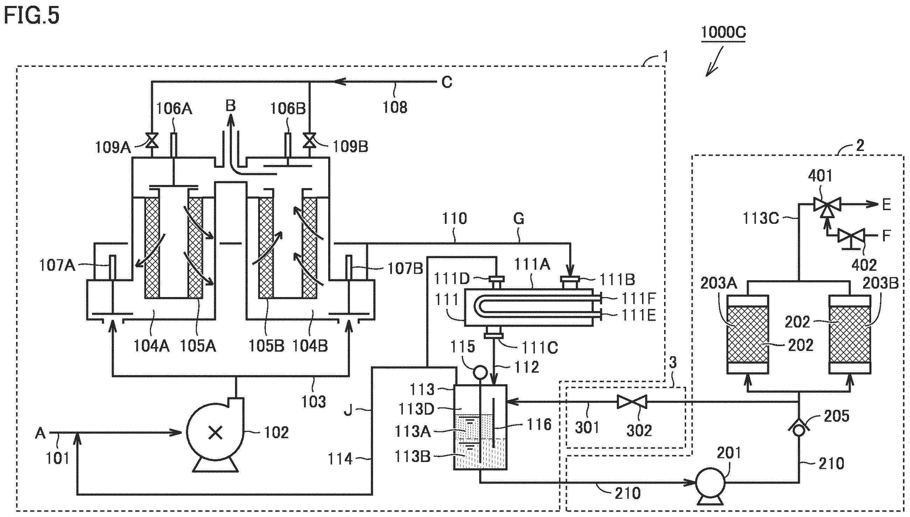

An organic solvent recovery system 1000C according to the present embodiment will be described with reference to Fig. 5. Fig. 5 is a diagram illustrating a configuration of organic solvent recovery system 1000C.

A basic configuration of organic solvent recovery system 1000C is the same as that of organic solvent recovery system 1000 described in the first embodiment above. A difference is that, in the configuration of dehydration device 2, a first dehydration treatment tank 203A and a second dehydration treatment tank 203B are disposed as the dehydration treatment tank. While dehydration material 202 in one of the treatment tanks is treated, dehydration device 2 can be continuously operated by operating the other one of the dehydration treatment tanks.

With this configuration, it is also possible to obtain the same operational effects as those of organic solvent recovery system 1000 according to the first embodiment above.

The embodiments disclosed herein should be considered to be exemplified in all respects and not restrictive. The scope of the present invention is defined not by the above description but by the claims, and is intended that meanings equivalent to the claims and all modifications within the scope are included.

In recovery device 1 in the above disclosure, there has been described an organic solvent recovery treatment in which the adsorption stage and the desorption stage are alternately executed by using first treatment tank 104A and second treatment tank 104B as the treatment tank. However, the organic solvent recovery treatment is not limited to the recovery treatment using the two treatment tanks.

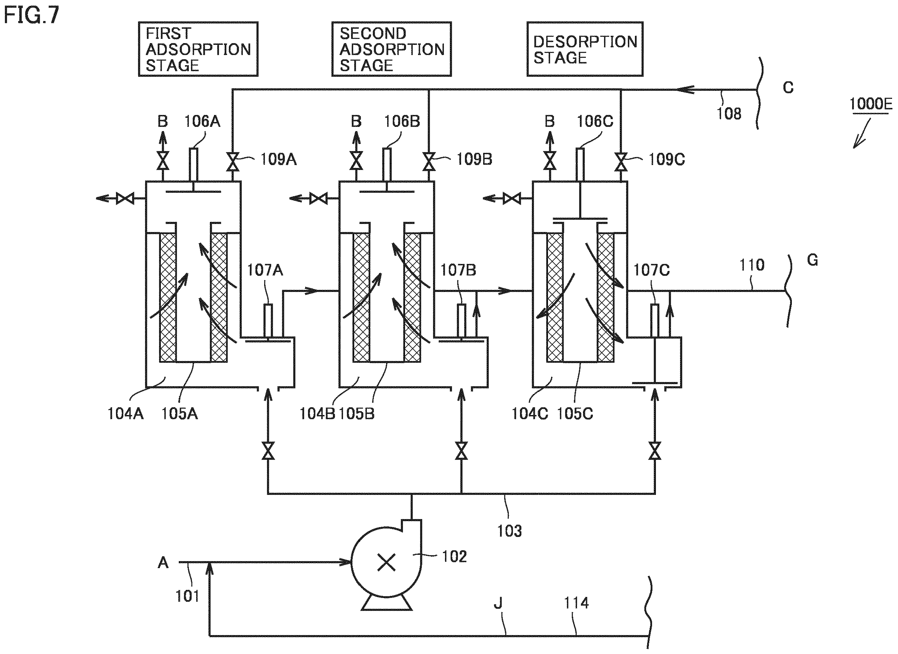

For example, as illustrated in Fig. 7, as a modification of organic solvent recovery system 1000 according to the first embodiment, an organic solvent recovery system 1000E may be adopted in which three treatment tanks of first treatment tanks 104A, second treatment tank 104B, and a third treatment tank 104C as disclosed in Japanese Patent Laying-Open No. 2014-147863 are adopted, the desorption stage is executed in one of the treatment tanks, and remaining treatment tanks are connected in series in multiple stages to execute the adsorption stage. In Fig. 7, dehydration device 2, return device 3, condenser 111, and separator 113 are not illustrated. Note that the number of treatment layers may be greater than or equal to three. Accordingly, it is possible to further increase a recovery efficiency of the organic solvent.

### REFERENCE SIGNS LIST

1: recovery device, 2: dehydration device, 3: return device, 101: treated gas line, 102: treated gas blower, 103: treated gas introduction line, 104A: first treatment tank, 104B: second treatment tank, 104C: third treatment tank, 105A: first adsorbent, 105B: second adsorbent, 105C: third adsorbent, 106A: first automatic upper damper, 106B: second automatic upper damper, 106C: third automatic upper damper, 107A: first automatic lower damper, 107B: second automatic lower damper, 107C: third automatic lower damper, 108: water vapor line, 109A: first water vapor on-off valve, 109B: second water vapor on-off valve, 110: desorbed gas line, 111: condenser, 111A: cooling water pipe, 111B: condenser inlet, 111C: condenser outlet, 111D: gas outlet, 111E: cooling water inlet, 111F: cooling water outlet, 112: desorbed liquid line, 113: separator, 113A: separated water, 113B: recovered solvent, 113C: dehydrated solvent discharge line, 113D: gas phase region, 114: gas line, 115: recovered solvent level monitor, 116: partition plate, 201: pump, 202: dehydration material, 203: dehydration treatment tank, 203A: first dehydration treatment tank, 203B: second dehydration treatment tank, 205: check valve, 210: recovered solvent line, 301: return line, 302: on-off valve, 401: dehydrated solvent valve, 402: flow regulating valve, 800: aeration tank, 1000, 1000A, 1000B, 1000C: organic solvent recovery systems, A: treated gas, B: clean gas, C: water vapor, E: dehydrated solvent, G: desorbed gas, H: desorbed liquid, J: returned gas.

## Claims

1. An organic solvent recovery system comprising:
a recovery device;
a dehydration device; and
a return device, wherein
the recovery device includes:
an adsorbent that adsorbs an organic solvent by coming into contact with a treated gas containing the organic solvent which is hardly soluble in water and has a specific gravity larger than that of the water, and desorbs the organic solvent by coming into contact with water vapor;
two or more treatment tanks in which the adsorbent is accommodated;
an adsorption stage that supplies the treated gas to the treatment tanks, removes the organic solvent onto the adsorbent through adsorption, and discharges a clean gas;
a desorption stage that supplies the water vapor to the treatment tanks, desorbs a recovered solvent from the adsorbent, and discharges a desorbed gas;
a stage that sequentially repeats the adsorption stage and the desorption stage for the two or more treatment tanks;
a condenser that cools and condenses the desorbed gas and discharges a desorbed liquid; and
a separator that separates the desorbed liquid into a layer of separated water and a layer of the recovered solvent,
the dehydration device includes:
a dehydration material that adsorbs moisture contained in the recovered solvent by coming into contact with the recovered solvent;
one or more dehydration treatment tanks in which the dehydration material is stored; and
a discharge mechanism that supplies the recovered solvent separated by the separator to the dehydration treatment tanks, and discharges, from the dehydration treatment tanks, a dehydrated solvent dehydrated from the recovered solvent by the dehydration material, and
the return device sends the recovered solvent to the layer of the recovered solvent in the separator when returning the recovered solvent in the dehydration treatment tanks to the separator.

2. The organic solvent recovery system according to claim 1, wherein the return device has a return flow path that discharges the recovered solvent to an outer side of the dehydration treatment tanks, and returns the recovered solvent to the separator in a case where the dehydration device stops supplying the recovered solvent to the dehydration treatment tanks.

3. The organic solvent recovery system according to claim 2, wherein the dehydration device includes a speed adjustment device that adjusts a speed of the recovered solvent to be returned to the separator.

4. The organic solvent recovery system according to claim 3, wherein the speed adjustment device pressurizes inner portions of the dehydration treatment tanks by using a part of the treated gas or the clean gas, and discharges the recovered solvent to the outer side of the dehydration treatment tanks.

5. The organic solvent recovery system according to any one of claims 1 to 4, comprising three or more of the treatment tanks, wherein the desorption stage is executed in one of the treatment tanks, and remaining treatment tanks are connected in series in multiple stages to execute the adsorption stage.
